# EUROPEAN PATENT APPLICATION

(11) **EP 4 738 861 A1**
(43) Date of publication of application: **06.05.2026**
(21) Application number: 24831461.9
(22) Date of filing: 16.05.2024
(51) Int. Cl.: H04N 23/60, G06T 7/00, H04N 7/18, H04N 23/698

(54) **SETTING METHOD, SETTING APPARATUS, AND COMPUTER PROGRAM**

(30) Priority: 29.06.2023 JP 2023107394
(71) Applicant: Panasonic Intellectual Property Management Co., Ltd., Kadoma-shi, Osaka 571-0057 (JP)
(72) Inventor: MIZUKOSHI, Kosuke, Kadoma-shi, Osaka 571-0057 (JP)
(74) Representative: Eisenführ Speiser
(86) International application number: PCT/JP2024/018133
(87) International publication number: WO 2025/004589

(57) **Abstract**

A method det the image capture region of the camera that accurately generates movement paths. A setting method is to be executed in a setting device that is connected to a plurality of cameras that captures different regions in one space and sets regions of videos to be used for generating a flow line of a target using videos obtained from the plurality of cameras. The setting method includes: acquiring, by a setting device, videos each including a plurality of frames captured by the plurality of cameras; extracting, by the setting device, a first region from each frame of a first video captured by a first camera; extracting, by the setting device, a second region different from the first region from each frame of a second video captured by a second camera that captures a region adjacent to a region captured by the first camera, detecting, by the setting device, a first flow line of a target from the first region for each frame of the first video, detecting, by the setting device, a second flow line of the target from the second region for each frame of the second video, and if the first flow line and the second flow line cannot be coupled to be one flow line, resetting, by the setting device, an interval between the first region and the second region.

## Description

### TECHNICAL FIELD

The present disclosure relates to a setting method, a setting device, and a computer program for setting regions of videos to be used for generating a flow line of a target using videos captured by a plurality of cameras.

### BACKGROUND ART

A monitoring device that monitors a target moving in a specific space is known (see, for example, Patent Document 1). In a monitoring camera, it is important to accurately grasp a target space. Patent Document 1 discloses correspondence between a map and a camera image.

In addition, a technique for extracting a flow line of a target moving in a specific space is also known (see, for example, Non-patent Documents 1 and 2).

### PRIOR ART DOCUMENT

### PATENT DOCUMENT

Patent Document 1: JP-A-2015-32069

### Non-patent Document

Non-patent Document 1: "On-site Cyber Physical System Technology for B2B", Hidehiko Shin, and three others, Panasonic Technical Journal, Vol. 65, No. 1, May 2019
Non-patent Document 2: "Multi-Camera People Tracking with a Probabilistic Occupancy Map", Francois Fleuret, et al., March 2007

### SUMMARY OF THE INVENTION

### PROBLEMS TO BE SOLVED BY THE INVENTION

In flow line extraction using only a video captured by one camera, a space in which the flow line can be generated is narrow. Further, it is not easy to combine videos captured by a plurality of cameras. Specifically, setting of regions of videos captured by the plurality of cameras is affected by various conditions such as a size of a target, a moving speed of the target, an environment in which the target moves, installation positions of the cameras, and performance of the cameras.

The present disclosure provides a setting method, a setting device, and a computer program for setting regions of videos to be used for generating a flow line of a target using videos captured by a plurality of cameras.

### SOLUTIONS TO THE PROBLEMS

A setting method of the present disclosure is to be executed in a setting device that is connected to a plurality of cameras that captures different regions in one space and sets regions of videos to be used for generating a flow line of a target using videos obtained from the plurality of cameras. The setting method includes: acquiring, by a setting device, videos each including a plurality of frames captured by the plurality of cameras; extracting, by the setting device, a first region from each frame of a first video captured by a first camera; extracting, by the setting device, a second region different from the first region from each frame of a second video captured by a second camera that captures a region adjacent to a region captured by the first camera, detecting, by the setting device, a first flow line of a target from the first region for each frame of the first video, detecting, by the setting device, a second flow line of the target from the second region for each frame of the second video, and if the first flow line and the second flow line cannot be coupled to be one flow line, resetting, by the setting device, an interval between the first region and the second region.

Such a general and specific aspect may be implemented by a system, a method, a computer program, and a combination thereof.

### EFFECTS OF THE INVENTION

The setting method, the setting device, and the computer program of the present disclosure can set regions of videos to be used for generating a flow line of a target using videos captured by a plurality of cameras.

### BRIEF DESCRIPTION OF THE DRAWINGS

Fig. 1A illustrates an example of a first flow line and a second flow line obtained from videos captured by two cameras.
Fig. 1B illustrates an example in which the first flow line and the second flow line illustrated in Fig. 1A are coupled.
Fig. 1C illustrates an example in which the first flow line overlaps with the second flow line.
Fig. 1D illustrates an example in which a partial region is cut out from frames obtained from the videos captured by the two cameras.
Fig. 2 is a schematic view for describing the videos captured by the two cameras and regions to be cut out from the videos.
Fig. 3 is a block diagram illustrating a configuration of a setting device according to a first embodiment.
Fig. 4A is a schematic view illustrating an example of region data to be used by the setting device.
Fig. 4B is a schematic view illustrating an example of region data to be used by the setting device.
Fig. 5A is a schematic view illustrating regions to be set for two different cameras.
Fig. 5B is a schematic view illustrating an example in which the regions of Fig. 5A are changed.
Fig. 5C is a schematic view illustrating an example in which the regions of Fig. 5A are changed.
Fig. 5D is a schematic view illustrating an example in which the regions of Fig. 5A are changed.
Fig. 5E is a schematic view illustrating an example in which the regions of Fig. 5A are changed.
Fig. 6A is a schematic view illustrating an example of order of region setting by the setting device.
Fig. 6B is a schematic view illustrating another example of the order of region setting by the setting device.
Fig. 7 is a flowchart indicating an example of processing to be executed by the setting device.

### DETAILED DESCRIPTION

An embodiment of the present disclosure will be described below with reference to the drawings. However, unnecessarily detailed description may be omitted. For example, detailed description of a well-known matter and repeated description of substantially the same configuration may be omitted. This is to avoid unnecessary redundancy of the following description and to facilitate understanding of those skilled in the art. Note that the accompanying drawings and the following description are provided in order for those skilled in the art to fully understand the present disclosure and are not intended to limit the subject matter described in the claims by the accompanying drawings and the following description.

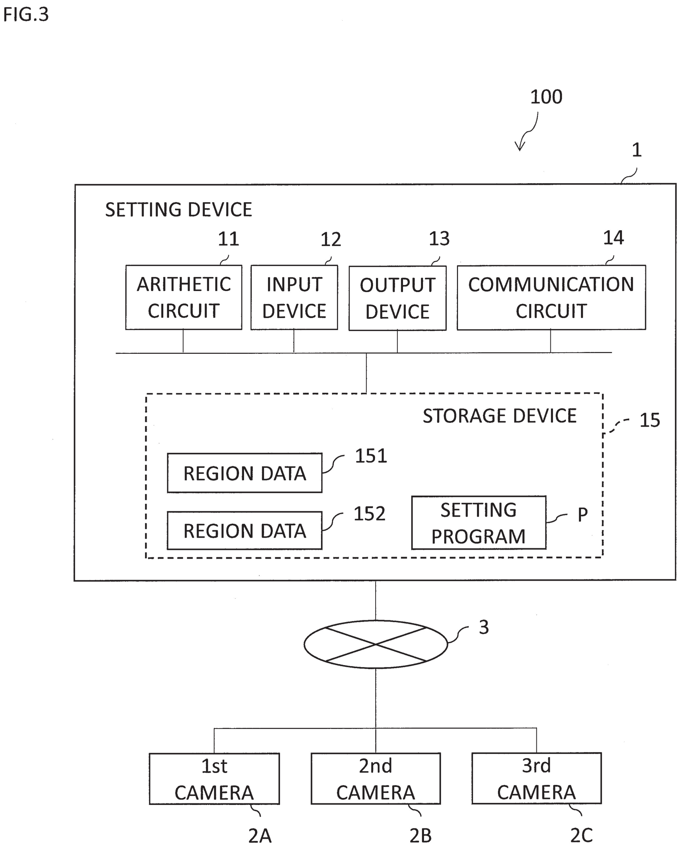

A generation system according to the present disclosure generates a flow line of one target from videos captured by a plurality of cameras. In the present disclosure, a "target" is a moving body that moves in a space. For example, the target can be a person, a robot, an automobile, or the like. Hereinafter, first, outline of processing to be performed in the generation system will be described. A specific configuration of the generation system will be described later with reference to Fig. 3.

The generation system first generates a plurality of flow lines for each video captured by each camera. The generation system also generates one continuous flow line by combining the plurality of generated flow lines. The generation system can cut out and use a specified region of frames of the video captured by each camera. As a result, the generation system can generate an accurate flow line. A setting method, a setting device, and a computer program according to the present disclosure set regions to be cut out from the respective frames from videos captured by a plurality of cameras.

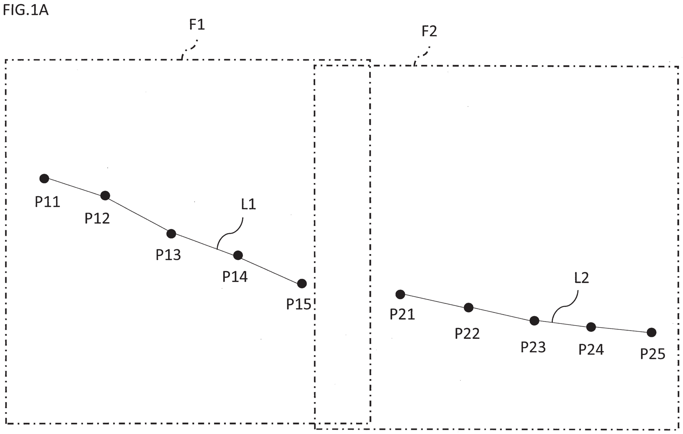

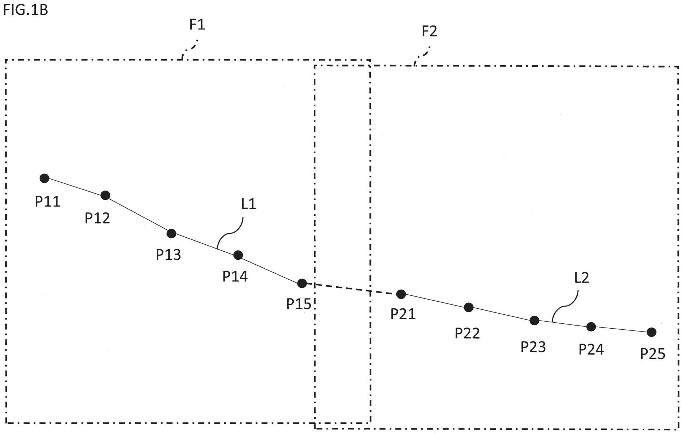

First, outline of processing of detecting flow lines from a first camera video and a second camera video as one flow line will be described. Fig. 1A illustrates an example of a first flow line and a second flow line obtained from videos captured by two cameras. As illustrated in Fig 1A, the first camera captures a video of a first region F1. In addition, the second camera captures a video of a second region F2 adjacent to the first region F1. Fig. 1A illustrates an example in which a target moves from the first region F1 to the second region F2. The generation system detects points P11 to P15 representing a position of the target from each frame of the video captured by the first camera. The generation system connects the detected points P11 to P15 to generate a first flow line L1. In addition, the generation device detects points P21 to P25 representing the position of the target from each frame of the video captured by the first camera. The generation device connects the detected points P21 to P25 to generate a second flow line L2. Fig. 1B illustrates an example in which the first flow line and the second flow line illustrated in Fig. 1A are coupled. As indicated by a broken line in Fig. 1B, the generation system generates one flow line by coupling the first flow line L1 and the second flow line L2 by coupling the point P15 and the point P21.

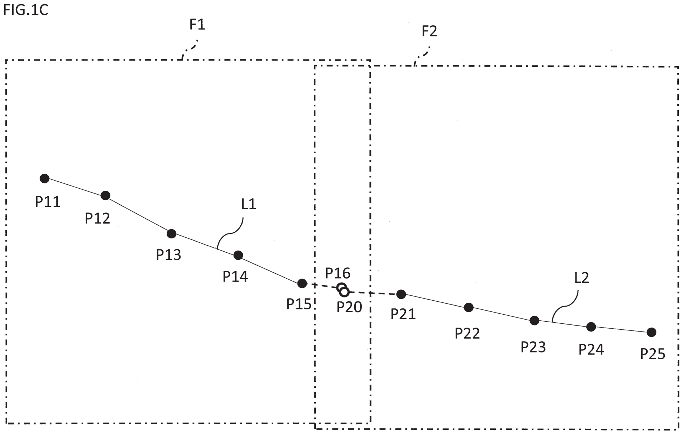

As illustrated in Fig. 1A, the regions F1, F2 captured by the respective cameras overlap with each other. However, the generation system preferably sets the regions to be used in the flow line generation so as not to overlap with each other. Fig. 1C illustrates an example in which the first flow line overlaps with the second flow line. For example, it is assumed that the target is detected at points P16, P20 between the points P15 and the point P21 as illustrated in Fig. 1C. In Fig. 1C, the points P16, P20 are shifted for ease of understanding of the drawing, but are actually at the same position. If the videos are separately captured by the first camera and the second camera as illustrated in Fig. 1C, the generation system detects the target separately, respectively. Thus, the first flow line L1 and the second flow line L2 can be regarded as separate flow lines.

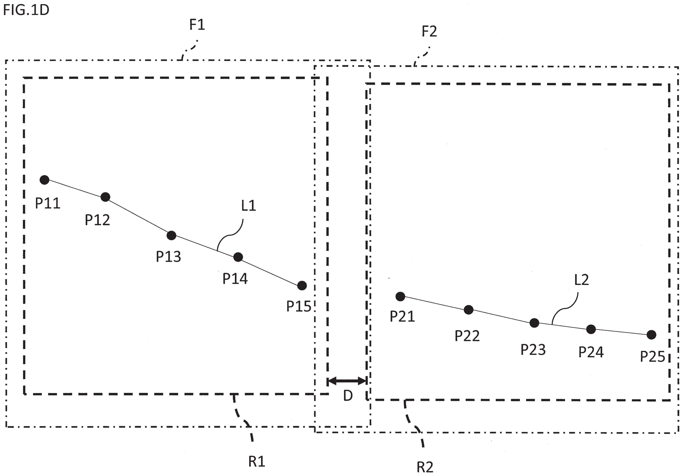

Fig. 1D illustrates an example in which a partial region is cut out from frames obtained from the videos captured by the two cameras. As illustrated in Fig. 1D, regions R1, R2 to be used for generating the flow line are set (broken lines) in the regions F1, F2 (dashed-dotted lines) where videos are captured by the respective cameras. In this event, by appropriately setting a distance D, which is an interval between the first region R1 and the second region R2, the flow line of the target can be accurately generated. For example, if the first region R1 overlaps with the second region, the target lines may overlap as described above with reference to Fig. 1C. On the other hand, if the first region R1 and the second region R2 are too wide, the first flow line L1 and the second flow line L2 cannot be coupled.

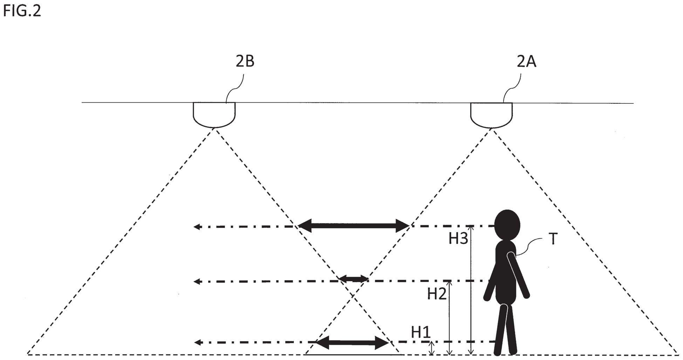

Fig. 2 illustrates an example in which videos of a target T are captured by two cameras 2A, 2B installed on the ceiling. In the example illustrated in Fig. 2, each of the cameras 2A, 2B is an omnidirectional camera. In Fig. 2, an angle of view of each of the cameras 2A, 2B is indicated by a broken line. The cameras 2A, 2B capture videos of a person that is the target T moving in a direction of a dashed-dotted line arrow. In the example of Fig. 2, while the target T moves, the target T appears in one of the cameras 2A, 2B near a height H2 of the waist of the target T. Thus, if the target is detected at the height H2 of the waist of the target T to generate a flow line, an accurate flow line is easily generated. On the other hand, at a height H1 of the feet of the target T, a period during which the two cameras 2A, 2B capture videos in an overlapped manner is longer than that at the height H2. Furthermore, at a height H3 of the head of the target, a period during which neither of the two cameras 2A, 2B captures a video is longer than that at the height H2. Thus, in a case where the target is detected at the height H1 of the feet of the target T, there is a possibility that flow lines are generated in an overlapped manner. In addition, at the height H1 of the feet of the target T, it may be difficult to follow the target due to an object, or the like, existing in the surroundings. Furthermore, at the height H3 of the head of the target T, there is a possibility that the flow line is broken due to increase in the period during which neither of the cameras 2A, 2B captures a video. The setting method, the setting device, and the computer program of the present disclosure use a video captured by each camera to set regions which support conditions of a target, an environment, and the like, as described above and in which the target can be easily followed.

### [Embodiment]

Fig. 3 illustrates a generation system 100 including a setting device 1 according to an embodiment. The setting device 1 is connected to a plurality of cameras 2A to 2C via a network 3. The setting device 1 sets a region to be used for generating a flow line of a target for each of videos captured by the cameras 2A to 2C. Further, the setting device 1 cuts out the set region from the video captured by each of the cameras 2A to 2C, and generates a flow line of the target. Fig. 3 illustrates an example in which the generation system 100 includes three cameras 2A to 2C. However, in the generation system 100, the number of cameras connected to the setting device 1 is not limited. Further, in the following description, in a case where it is not particularly necessary to distinguish, the cameras 2A to 2C will be simply described as the camera 2.

For example, as illustrated in Fig. 3, the setting device 1 is an information processing device including an arithmetic circuit 11, an input device 12, an output device 13, a communication circuit 14, and a storage device 15.

The arithmetic circuit 11 is a controller that controls the entire setting device 1. For example, the arithmetic circuit 11 reads and executes a setting program P stored in the storage device 15. As a result, the setting device 1 implements various types of processing related to setting of the region to be used for generating the flow line for each video captured by each camera. The arithmetic circuit 11 may be various processors such as a CPU, an MPU, a GPU, an FPGA, a DSP, and an ASIC, or may be a dedicated hardware circuit.

The input device 12 may be an operation button, a keyboard, a touch panel, a microphone, or the like, to be used for performing operation and inputting data. The output device 13 may be a display, a speaker, a lamp, or the like, to be used for outputting a processing result or data.

The communication circuit 14 performs data communication between the setting device 1 and an external device such as each camera 2. The data communication is performed in a wired and/or wireless manner, for example, according to known communication standards. For example, wired data communication may be performed by using, as the communication circuit 14, a communication controller of a semiconductor integrated circuit that operates in conformity with Ethernet (registered trademark) standards and/or USB (registered trademark) standards. In addition, wireless data communication may be performed by using, as the communication circuit 14, a communication controller of a semiconductor integrated circuit that operates in conformity with IEEE802.11 standards related to a wireless local area network (LAN) and/or a fourth/fifth/sixth generation mobile communication system, which is so-called 4G/5G/6G related to mobile communication.

The storage device 15 is a recording medium that records various types of information. The storage device 15 is implemented by, for example, a RAM, a ROM, a flash memory, a solid state drive (SSD), a hard disk drive, other storage devices, or an appropriate combination thereof. The storage device 15 stores various kinds of data, and the like, obtained by processing such as generation of a flow line and setting of regions in the setting device 1. In addition, the storage device 15 stores the setting program P.

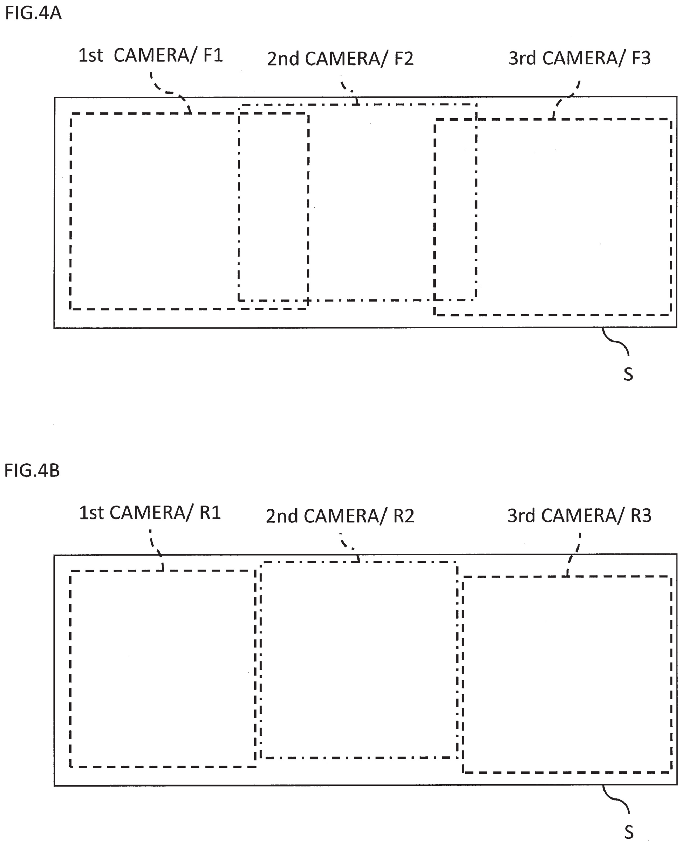

Region data 151 is data indicating a region of a space captured by each camera 2 in the space. Fig. 4A is a schematic view illustrating an example of the region data 151. For example, as illustrated in the example in Fig. 4A, the region data 151 is data indicating association between each camera and a region captured by each camera in a space S. Fig. 4A illustrates the space S as a two-dimensional map. In addition, in Fig. 4A, the region F1 that is to be captured by the first camera 2A and the region F3 that is to be captured by the third camera 2C are indicated by broken lines in the space S represented as a two-dimensional space. In Fig. 4A, the region F2 that is to be captured by the second camera is indicated by a dashed-dotted line in the space S represented as a two-dimensional space. For example, the region data 151 is generated according to operation of an operator.

Region data 152 is data indicating a region to be used for generating a flow line in the region where a video of the space is captured by each camera. Fig. 4B is a schematic view illustrating an example of the region data. For example, as illustrated in the example in Fig. 4B, the region data is data indicating association between each camera and a region to be cut out for generating a flow line from the video captured by each camera in the space S. In Fig. 4B, a region R1 to be cut out from a frame captured by the first camera 2A and a region R3 to be cut out from a frame captured by the third camera are indicated by broken lines in the space S represented as a two-dimensional space. In Fig. 4A, a region R2 to be cut out from a frame captured by the second camera 2B is indicated by a dashed-dotted line in the space S represented as a two-dimensional space. For example, the region data 152 is generated based on the region data 151 in the setting device 1. By using the regions set by the region data 152, it is possible to appropriately generate the flow line of the target.

Each kind of processing of setting the regions of the videos to be used for generating the flow line, to be executed in the arithmetic circuit 11 will be described. The arithmetic circuit 11 also generates the flow line in the following processing. However, the flow line to be generated by the following processing is generated in order to set the regions to be used for generating the flow line. Actual flow line generation for flow line analysis, or the like, is executed after setting of the regions described below.

### (Initial Setting)

The arithmetic circuit 11 receives a setting signal of initial setting of each camera 2 via the input device 12 according to the operation of the operator. The arithmetic circuit 11 sets parameters of each camera using the received setting signal. For example, the parameters of each camera include a position, a focal length, and the like, of the camera. Alternatively, a perspective projection matrix may be used as the parameters of each camera. In addition, the arithmetic circuit 11 generates the region data 151 using the received setting signal. Specifically, the arithmetic circuit 11 associates the region for which a video is to be captured by each camera 2 on a map representing the two-dimensional space based on the setting signal. In addition, the arithmetic circuit 11 stores the generated region data 151 in the storage device 15. After the initial setting, each camera 2 starts acquisition of a video.

### (Acquisition of Video)

The arithmetic circuit 11 acquires a video obtained by each camera 2 via the communication circuit 14. The arithmetic circuit 11 stores the acquired video in the storage device 15. The video acquired by the arithmetic circuit 11 here is a video in which the target moves in the space. Note that the arithmetic circuit 11 may acquire a video in advance and read and use a past video stored in the storage device 15.

### (Selection of Two Cameras)

The arithmetic circuit 11 selects two cameras 2 with reference to the region data 151 and the region data 152. Here, the arithmetic circuit 11 selects two cameras 2 for which regions to be used for generating a flow line are not set among the two cameras 2 that capture videos of adjacent regions. It is assumed that the region data 151 includes the regions F1 to F3 illustrated in Fig. 4A, and the regions to be used for generating the flow line are not set for any of the cameras 2A to 2C. In this event, the arithmetic circuit 11 selects, for example, the first camera 2A and the second camera 2B that captures a video of a region close to a region captured by the first camera 2A.

### (Reception of Time)

The arithmetic circuit 11 receives time for shifting from the region captured by the first camera to the region captured by the second camera between the selected two cameras. The time is input by operation of the operator via the input device 12. The arithmetic circuit 11 uses the received time for shifting to subsequently generate the flow line. Specifically, the received time for shifting is used to determine whether the flow lines are connected to be one flow line within the received time for shifting.

Here, the region captured by the first camera and the region captured by the second camera are not determined at the timing when the arithmetic circuit 11 receives the time for shifting. Thus, for example, the arithmetic circuit 11 uses a tentative region captured by the first camera as the region captured by the first camera, and uses a tentative region captured by the second camera as the region captured by the second camera. The tentative region captured by the first camera and the tentative region captured by the second camera may be designated by operation of the operator, for example. Alternatively, the tentative region captured by the first camera and the tentative region captured by the second camera may be a region captured by the first camera and a region captured by the second camera, which are indicated by the region data 151.

As illustrated in Fig. 4A, the region captured by the first camera and the region captured by the second camera, which are indicated by the region data 151 may overlap with each other. Thus, in a case where the regions indicated by the region data 151 are respectively set as the tentative region captured by the first camera and the tentative region captured by the second camera, the arithmetic circuit 11 may receive, for example, a value such as a region of time at which videos are captured or a frame number of a moving image as the time for shifting from the region captured by the first camera to the region captured by the second camera. If there is a period during which the video of the target is captured only by the first camera and there is a period during which the video of the target is captured only by the second camera, the regions indicated by the region data 151 can be set as the tentative region captured by the first camera and the tentative region captured by the second camera.

### (Detection of Target)

The arithmetic circuit 11 detects a target from each frame of the video captured by each camera 2 using a predetermined algorithm. In this event, the arithmetic circuit 11 detects coordinates of the target from the region cut out from each frame. Specifically, the arithmetic circuit 11 cuts out a preset rectangular region from the entire frame of the video as a tentative region to be used for generating the flow line. Further, the arithmetic circuit 11 may detect the target from the tentative region cut out from each frame. The preset region may be the entire region captured by each camera or at least part of the region. For example, part reduced at a predetermined ratio in the entire region captured by each camera 2 may be set as the tentative region.

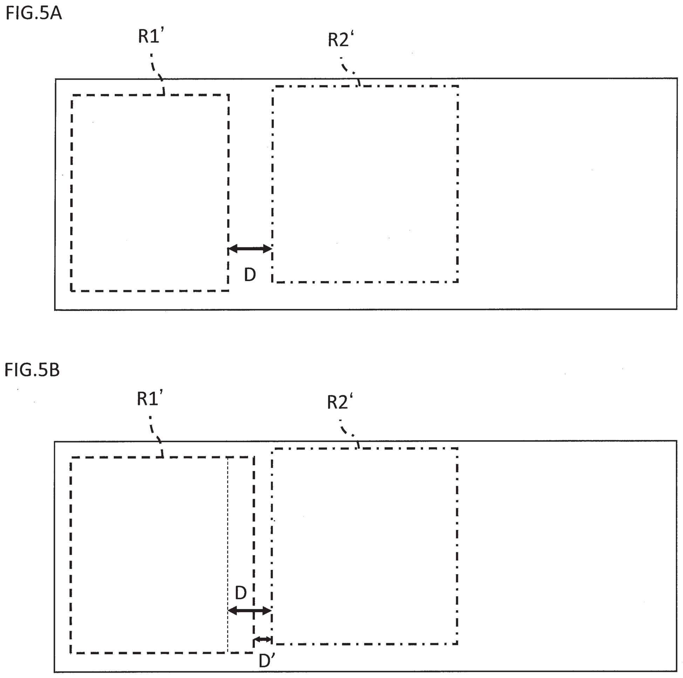

For example, the arithmetic circuit 11 cuts out a rectangular portion having a first predetermined size as a tentative first region from the region F1 of each frame of the first video captured by the first camera 2A as illustrated in Fig. 4A. The first predetermined size may be the same size as the region F1 of the video of the first camera, or may be a size including at least part of the region F1. In addition, the arithmetic circuit 11 cuts out, as a tentative second region, at least part that is different from the tentative first region and is a rectangle of a second predetermined size from the region F2 of each frame of the second video captured by the second camera 2B that captures a region adjacent to the region captured by the first camera 2A. The second predetermined size may be the same size as the region F2 of the video of the second camera, or may be a size including at least part of the region F2. Fig. 5A illustrates an example of a tentative first region R1' and a tentative second region R2'. If the tentative first region R1' and the tentative second region R2' are determined as the actual first region R1 and the actual second region R2 in subsequent processing, the tentative first region R1' and the tentative second region R2' are stored in the storage device 15 as the region data 152.

### (Generation of Flow Line)

The arithmetic circuit 11 generates a flow line of the target for the video captured by each camera 2. Specifically, the arithmetic circuit 11 generates the first flow line by coupling coordinates of the target detected from the tentative first region of each frame of the first camera 2A. Further, the arithmetic circuit 11 couples coordinates of the target detected from the tentative second region of the second camera 2B to generate the second flow line. The arithmetic circuit 11 uses the "time for shifting" for shifting from the region captured by the first camera to the region captured by the second camera, which is received in the processing described above, in the generation of the flow line. It is possible to determine whether the first flow line and the second flow line are connected as one line by using the time for shifting.

### (Determination)

The arithmetic circuit 11 determines whether the flow lines generated from the videos of the two cameras 2 are coupled, overlapping, or are broken. If the first flow line and the second flow line are correctly coupled, the arithmetic circuit 11 generates the region data 152 in which the tentative first region R1' is set as the first region R1 and the tentative second region R2' is set as the second region R2, and stores the region data in the storage device 15.

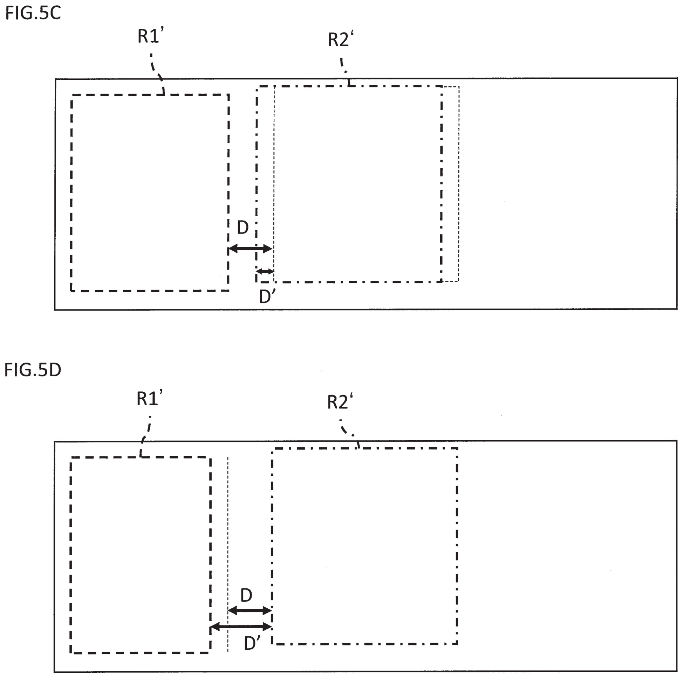

In a case where the first flow line and the second flow line are broken and not coupled, the arithmetic circuit 11 sets the distance D between the tentative first region R1' and the tentative second region R2' to be narrower. For example, the arithmetic circuit 11 may change the state from the state illustrated in Fig. 5A to the state as illustrated in Fig. 5B. Specifically, the new tentative first region R1' may be set by greatly changing the size such that a side close to the tentative second region R2' of the tentative first region R1' becomes closer to the tentative second region R2'. In this event, the arithmetic circuit 11 may increase the size of at least one of the tentative first region R1' or the tentative second region R2' by a predetermined step width. By the tentative first region R1' being expanded, a new distance D' between the tentative first region R1' and the tentative second region R2' becomes narrower than the distance D. Furthermore, for example, as illustrated in Fig. 5C, the arithmetic circuit 11 may set a new tentative second region R2' by sliding the tentative second region R2' so as to approach the tentative first region R1'. In this event, the arithmetic circuit 11 may slide at least one of the tentative first region R1' or the tentative second region R2' so as to approach the other by a predetermined step width. By the tentative second region R2' being slid, the new distance D' between the tentative first region R1' and the tentative second region R2' becomes narrower than the distance D.

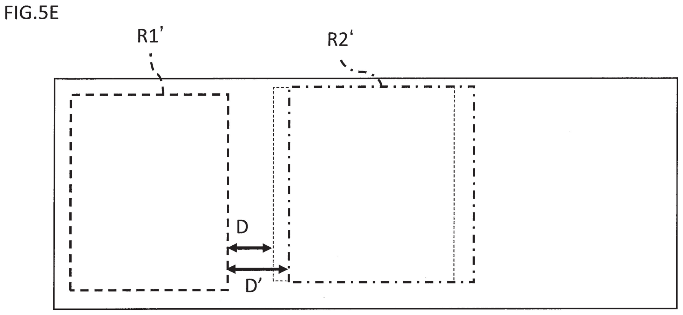

In a case where the first flow line overlaps with the second flow line, the arithmetic circuit 11 sets the distance D between the tentative first region R1' and the tentative second region R2' to be larger. For example, as illustrated in Fig. 5D, the arithmetic circuit 11 may set a new tentative first region R1' by changing the size to be small such that a side close to the tentative second region R2' of the tentative first region R1' is away from the tentative second region R2'. In this event, the arithmetic circuit 11 may reduce the size of at least one of the tentative first region R1' or the tentative second region R2' by a predetermined step width. By the size of the tentative first region R1' being reduced, the new distance D' between the tentative first region R1' and the tentative second region R2' becomes wider than the distance D. Furthermore, for example, as illustrated in Fig. 5E, the arithmetic circuit 11 may set a new tentative second region R2' by sliding the tentative second region R2' so as to be away from the tentative first region R1'. In this event, the arithmetic circuit 11 may slide at least one of the tentative first region R1' or the tentative second region R2' so as to be away from the other by a predetermined step width. By the tentative second region R2' being slid, a new distance D' between the tentative first region R1' and the tentative second region R2' becomes wider than the distance D.

If the tentative first region R1' and the tentative second region R2' are changed, the arithmetic circuit 11 newly generates the first flow line and the second flow line. Further, the arithmetic circuit 11 determines whether the newly generated first flow line and second flow line are correctly coupled. The arithmetic circuit 11 continues to update the tentative first region R1' and the tentative second region R2' until the first flow line and the second flow line are correctly coupled. Further, if the first flow line and the second flow line are correctly coupled, the arithmetic circuit 11 determines the tentative first region R1' as the first region R1, and determines the tentative second region R2' as the second region R.

If the new tentative first region R1' and the new tentative second region R2' are set, the arithmetic circuit 11 generates the first flow line L1 and the second flow line L2 again. Further, the arithmetic circuit 11 determines whether the first flow line L1 and the second flow line L2 generated again are correctly coupled.

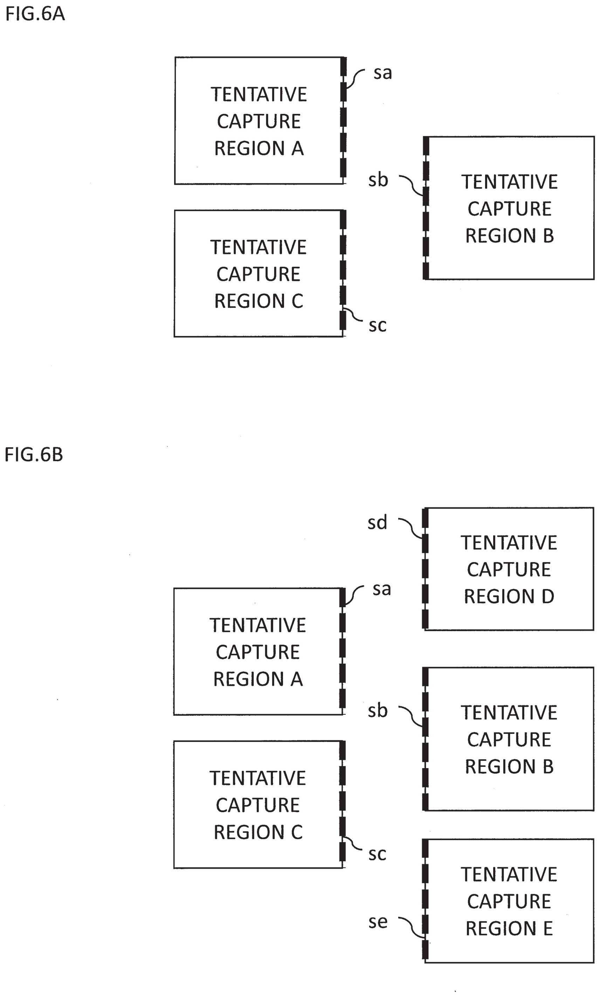

In Fig. 4B, an example in which one side of the first region R1 is close to one side of the second region R2 has been described. However, as illustrated in Figs. 6A and 6B, one side of one region may be close to sides of a plurality of regions. Figs. 6A and 6B are schematic views illustrating an example of order of region setting by the setting device. In such an example, when the tentative region is changed, it is necessary to change the tentative region while minimizing influence on other regions. For example, in the example of Fig. 6A, it is assumed that a tentative capture region A and a tentative capture region B are selected as change targets. In this event, if the tentative capture region B is changed, a position of a side sb moves and affects the other tentative capture region C. Thus, the tentative capture region A is changed.

Furthermore, for example, in the example of Fig. 6B, it is assumed that the tentative capture region A and a tentative capture region D are selected as the change targets in a first stage. In this event, the tentative capture region D is changed in accordance with a position of a side sa without changing the tentative capture region A. In a second stage, the tentative capture region A and the tentative capture region B are selected, and the tentative capture region B is changed in accordance with the position of the side sa without changing the tentative capture region A. In a third stage, the tentative capture region B and the tentative capture region C are selected, and the tentative capture region C is changed in accordance with the position of the side sb without changing the tentative capture region B. In a fourth stage, the tentative capture region C and the tentative capture region E are selected, and the tentative capture region E is changed in accordance with a position of a side sc without changing the tentative capture region C. If the position of the side once fixed is changed, the other fixed sides are affected. Thus, the other regions are changed without changing the position of the side once fixed. In the examples of Figs. 6A and 6B, only the sides facing each other in a longitudinal direction are considered in the description, but the sides facing each other in a lateral direction are similarly adjusted. For example, the tentative capture region A and the tentative capture region C are similarly adjusted.

### (Processing of Setting of Region)

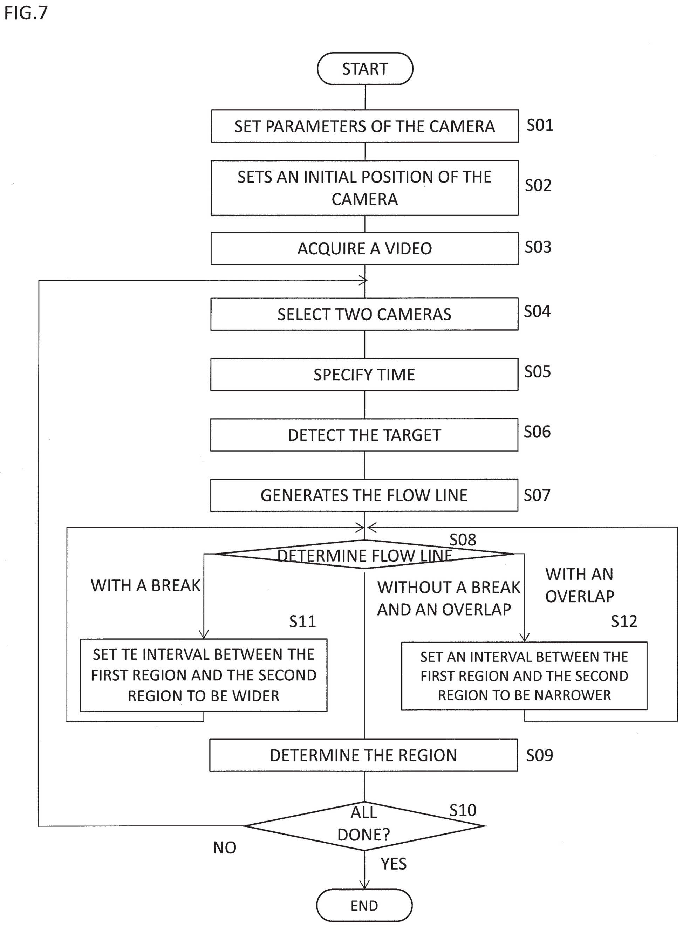

Flow of processing in the setting device 1 will be described with reference to a flowchart indicated in Fig. 7. Specific processing of individual steps of the flowchart has been described above, and thus, each step will be described in a simplified manner.

The arithmetic circuit 11 sets parameters of the camera (S01).

Further, the arithmetic circuit 11 sets an initial position of the camera 2 (S02). As a result, the arithmetic circuit 11 generates the region data 151 and stores the region data in the storage device 15.

The arithmetic circuit 11 acquires a video from each camera 2 (S03).

The arithmetic circuit 11 selects two cameras 2 which are close to each other and for which regions to be used for generating the flow line are not set (S04).

The arithmetic circuit 11 receives time for shifting from the tentative region of the first camera to the tentative region of the second camera between the two cameras selected in step S04 (S05).

The arithmetic circuit 11 detects coordinates of the target from the tentative region of each frame of the video (S06).

The arithmetic circuit 11 generates the first flow line and the second flow line by coupling the coordinates in the frames obtained in step S06. The arithmetic circuit 11 couples the first flow line and the second flow line (S07).

The arithmetic circuit 11 determines the flow line in which the first flow line and the second flow line are coupled in step S07 (S08).

As a result of the determination in step S08, if the first and second flow lines are correctly coupled without a break and an overlap, the arithmetic circuit 11 determines the tentative first region as the first region, and determines the tentative second region as the second region (S09). In this event, the arithmetic circuit 11 generates the region data 152 including the first region and the second region, and stores the region data in the storage device 15.

If the first region and the second region are determined, it is determined whether the setting of the regions to be used for generating the flow line ends for all the cameras (S10). In a case where the processing has not ended (S10: No), the processing returns to the processing in step S04, and the arithmetic circuit 11 executes the processing for an undetermined region.

As a result of the determination in step S08, if there is a break in the first and second flow lines, the arithmetic circuit 11 changes an interval between the tentative first region and the tentative second region to be wider, and newly sets the tentative first region and the tentative second region (S11).

As a result of the determination in step S08, if there is an overlap between the first and second flow lines, the arithmetic circuit 11 changes the interval between the tentative first region and the tentative second region to be narrower, and newly sets the tentative first region and the tentative second region (S12).

In a case where the setting of the regions to be used for generating the flow line has ended for all the cameras (S10: Yes), the processing ends.

As described above, the setting device 1 according to the embodiment sets the regions of the videos to be used for generating the flow line of the target using the videos captured by the plurality of cameras. This enables the generation system 100 to accurately generate the flow line by using the set regions.

### (Outline of Embodiment)

(1) A setting method according to the present disclosure is a setting method to be executed in a setting device that is connected to a plurality of cameras that captures different regions in one space and sets regions of videos to be used for generating a flow line of a target using videos obtained from the plurality of cameras, the setting method including:
   acquiring, by the setting device, the videos each including a plurality of frames captured by the plurality of cameras;
   extracting, by the setting device, a first region from each frame of a first video captured by a first camera;
   extracting, by the setting device, a second region different from the first region from each frame of a second video captured by a second camera that captures a region adjacent to a region captured by the first camera;
   detecting, by the setting device, a first flow line of the target from the first region for each frame of the first video;
   detecting, by the setting device, a second flow line of the target from the second region for each frame of the second video; and
   if the first flow line and the second flow line cannot be coupled to be one flow line, resetting, by the setting device, an interval between the first region and the second region.

This makes it possible to appropriately set the regions to be used for generating the flow line of the target.

(2) In the generation method of (1), if the first flow line and the second flow line cannot be coupled to be one flow line, the setting device may set the interval between the first region and the second region to be narrower.

This makes it possible to appropriately set the regions to be used for generating the flow line of the target.

(3) In the generation method of (1) or (2), if the first flow line overlaps with the second flow line, the setting device may set the interval between the first region and the second region to be wider.

This makes it possible to appropriately set the regions to be used for generating the flow line of the target.

(4) In the generation method of (1) to (3), if the first flow line and the second flow line are coupled, the setting device newly determines the first region determined in previous processing as the first region, and sets the second region determined in the previous processing as the second region.

This makes it possible to appropriately set the regions to be used for generating the flow line of the target.

(5) In the generation method of (1) to (4), if the setting device sets the interval between the first region and the second region to be narrower, a size of at least one of the first region or the second region may be increased.

This makes it possible to appropriately set the regions to be used for generating the flow line of the target.

(6) In the generation method of (1) to (5), if the setting device sets the interval between the first region and the second region to be wider, a size of at least one of the first region or the second region may be reduced.

This makes it possible to appropriately set the regions to be used for generating the flow line of the target.

(7) In the generation method of (1) to (6), if the setting device sets the interval between the first region and the second region to be narrower, at least one of the first region or the second region may be slid so as to be closer to or partially overlap with the other region.

This makes it possible to appropriately set the regions to be used for generating the flow line of the target.

(8) In the generation method of (1) to (7), if the setting device sets the interval between the first region and the second region to be wider, at least one of the first region or the second region may be set to be slid so as to be closer to the other region.

This makes it possible to appropriately set the regions to be used for generating the flow line of the target.

(9) In the generation method of (1) to (8), the target may be a person.

This makes it possible to appropriately set the regions to be used for generating a flow line of the person.

(10) In the generation method of (1) to (9), the video may be a video obtained by an omnidirectional camera.

This makes it possible to appropriately set the regions to be used for generating the flow line of the target using the video obtained by the omnidirectional camera.

(11) A setting device of the present disclosure is a setting device that is connected to a plurality of cameras that captures different regions in one space, and sets regions of videos to be used for generating a flow line of a target using videos obtained from the plurality of cameras, the setting device including an arithmetic circuit, the arithmetic circuit being configured to:
acquire the videos each including a plurality of frames captured by the plurality of cameras;
extract a first region from each frame of a first video captured by a first camera;
extract a second region different from the first region from each frame of a second video captured by a second camera that captures a region adjacent to a region captured by the first camera;
detect a first flow line of the target from the first region for each frame of the first video;
detect a second flow line of the target from the second region for each frame of the second video; and
if the first flow line and the second flow line cannot be coupled to be one flow line, reset an interval between the first region and the second region.

This makes it possible to appropriately set the regions to be used for generating the flow line of the target.

(12) A computer program of the present disclosure is to be executed by a setting device that is connected to a plurality of cameras that captures different regions in one space, and sets regions of videos to be used for generating a flow line of a target using videos obtained from the plurality of cameras, and causes the setting device to execute the setting method according to any one of (1) to (10).

This makes it possible to appropriately set the regions to be used for generating the flow line of the target.

The setting method, the setting device, and the computer program described in all claims of the present disclosure are implemented by cooperation with hardware resources, for example, a processor, a memory, and a computer program.

### INDUSTRIAL APPLICABILITY

The setting method, the setting device, and the computer program of the present disclosure are useful for generating a flow line of a target using videos captured by a plurality of cameras.

## Claims

1. A setting method to be executed in a setting device that is connected to a plurality of cameras that captures different regions in one space and sets regions of videos to be used for generating a flow line of a target using videos obtained from the plurality of cameras, the setting method comprising:
acquiring, by the setting device, the videos each including a plurality of frames captured by the plurality of cameras;
extracting, by the setting device, a first region from each frame of a first video captured by a first camera;
extracting, by the setting device, a second region different from the first region from each frame of a second video captured by a second camera that captures a region adjacent to a region captured by the first camera;
detecting, by the setting device, a first flow line of the target from the first region for each frame of the first video;
detecting, by the setting device, a second flow line of the target from the second region for each frame of the second video; and
if the first flow line and the second flow line cannot be coupled to be one flow line, resetting, by the setting device, an interval between the first region and the second region.

2. The setting method according to claim 1, wherein if the first flow line and the second flow line cannot be coupled to be one flow line, the setting device sets the interval between the first region and the second region to be narrower.

3. The setting method according to claim 1, wherein if the first flow line overlaps with the second flow line, the setting device sets the interval between the first region and the second region to be wider.

4. The setting method according to claim 1 or 2, wherein if the first flow line and the second flow line are coupled, the setting device newly determines the first region determined in previous processing as the first region, and newly sets the second region determined in the previous processing as the second region.

5. The setting method according to claim 2, wherein if the setting device sets the interval between the first region and the second region to be narrower, a size of at least one of the first region or the second region is increased.

6. The setting method according to claim 3, wherein if the setting device sets the interval between the first region and the second region to be wider, a size of at least one of the first region or the second region is reduced.

7. The setting method according to claim 2, wherein if the setting device sets the interval between the first region and the second region to be narrower, at least one of the first region or the second region is slid so as to be closer to or partially overlap with the other region.

8. The setting method according to claim 3, wherein if the setting device sets the interval between the first region and the second region to be wider, at least one of the first region or the second region is set to be slid so as to be closer to the other region.

9. The setting method according to claim 1, wherein the target is a person.

10. The setting method according to claim 1, wherein the video is a video obtained by an omnidirectional camera.

11. A setting device that is connected to a plurality of cameras that captures different regions in one space, and sets regions of videos to be used for generating a flow line of a target using videos obtained from the plurality of cameras, the setting device comprising an arithmetic circuit, the arithmetic circuit being configured to:
acquire the videos each including a plurality of frames captured by the plurality of cameras;
cut out a first region from each frame of a first video captured by a first camera;
cut out a second region different from the first region from each frame of a second video captured by a second camera that captures a region adjacent to a region captured by the first camera;
detect a first flow line of the target from the first region for each frame of the first video;
detect a second flow line of the target from the second region for each frame of the second video; and
if the first flow line and the second flow line cannot be coupled to be one flow line, reset an interval between the first region and the second region.

12. A computer program to be executed by a setting device that is connected to a plurality of cameras that captures different regions in one space, and sets regions of videos to be used for generating a flow line of a target using videos obtained from the plurality of cameras, the computer program causing the setting device to execute the setting method according to claim 1.
